(19) **Europäisches Patentamt**
**European Patent Office**
**Office européen des brevets**

(11) **EP 4 359 825 B1**

(12) **FASCICULE DE BREVET EUROPEEN**

(45) Date de publication et mention
de la délivrance du brevet:
**19.11.2025 Bulletin 2025/47**

(21) Numéro de dépôt: **23721429.1**

(22) Date de dépôt: **25.04.2023**

(51) Classification Internationale des Brevets (IPC):
***G01S 19/21*** *(2010.01)*

(52) Classification Coopérative des Brevets (CPC):
**G01S 19/215**

(86) Numéro de dépôt international:
**PCT/EP2023/060849**

(87) Numéro de publication internationale:
**WO 2023/208957 (02.11.2023 Gazette 2023/44)**

(54) **PROCÉDÉ DE DÉTECTION D'UNE PLURALITÉ DE SIGNAUX DE GÉOLOCALISATION**

VERFAHREN ZUR DETEKTION EINER VIELZAHL VON GEOLOKALISIERUNGSSIGNALEN

METHOD FOR DETECTING A PLURALITY OF GEOLOCATION SIGNALS

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **27.04.2022 FR 2203847**

(43) Date de publication de la demande:
**01.05.2024 Bulletin 2024/18**

(73) Titulaire: **Airbus Defence and Space SAS
31402 Toulouse Cedex 4 (FR)**

(72) Inventeurs:
• **CHARBONNIERAS, Christophe
31402 Toulouse Cedex 4 (FR)**
• **CHOUTEAU, Jean-Frédéric
31402 Toulouse cedex 4 (FR)**
• **RAIMONDI, Mathieu
31402 Toulouse Cedex 4 (FR)**
• **GADAT, Benjamin
31402 TOULOUSE Cedex 04 (FR)**
• **BOURGOIN, Hugo
31402 Toulouse Cedex 4 (FR)**

(74) Mandataire: **Santarelli
Tour Trinity
1 bis Place de la Défense
92400 Courbevoie (FR)**

(56) Documents cités:
**US-A1- 2003 218 568     US-A1- 2021 333 411
US-A1- 2021 382 179**

**Description**

**Domaine de l'invention**

Le domaine de l'invention est celui des récepteurs de géolocalisation.

L'invention se rapporte plus particulièrement à une méthode de détection de signaux de géolocalisation présents au sein d'un signal reçu par un tel récepteur de géolocalisation.

L'invention a ainsi des applications, notamment, mais non exclusivement, dans tous les domaines dans lesquels les récepteurs de géolocalisation sont utilisés. Il s'agit par exemple des domaines de la santé, du sport, des applications domestiques (telles que la sécurité ou l'électroménager) ou du suivi d'objets.

**Art antérieur et ses inconvénients**

Dans un système de géolocalisation par satellites du type GNSS (pour « Global Navigation Satellite System » en langue anglaise), la performance d'un récepteur de géolocalisation (e.g. la précision l'intégrité, la continuité et la disponibilité du service) est directement liée au nombre de signaux de géolocalisation émis par les satellites de la constellation en question que le récepteur est capable de détecter et de traiter. En d'autres termes, maximiser le nombre de signaux de géolocalisation vus par l'antenne du récepteur de géolocalisation permet d'optimiser les performances du récepteur.

Cependant, la détection des signaux de géolocalisation est limitée en pratique par la présence de signaux interférents au sein du signal reçu par le récepteur.

Plus particulièrement, de tels signaux interférents sont par exemple des signaux inter-système. Il peut s'agir par exemple de pollutions électromagnétiques d'un système de communications exploitant des bandes de fréquences adjacentes au système de géolocalisation considéré, ou bien de signaux de géolocalisation appartenant à un autre système de géolocalisation que celui considéré.

De tels signaux interférents peuvent également être des signaux intra-système. Par exemple, pour un système de géolocalisation donné, les signaux de géolocalisation de fortes amplitudes se comportent comme des signaux interférents perturbants vis-à-vis des signaux de géolocalisation de plus faibles amplitudes reçus simultanément. En d'autres termes, les signaux de géolocalisation de fortes amplitudes peuvent masquer les signaux de géolocalisation de plus faibles amplitudes reçus simultanément et donc empêcher la détection de ces derniers. Par exemple, sur la base de traitements classiques mis en œuvre au sein du récepteur, l'utilisation de séquences de Gold à 10 bits comme codes d'étalement pour les signaux de type L1C/A dans le système GPS (pour « Global Positioning System » en anglais) limite l'isolation des séquences entre elles à 21 dB. Ainsi, la détection d'un signal de géolocalisation donné est fortement perturbée par la présence de signaux intra-système, en particulier ceux dont l'excès d'amplitude par rapport à celle du signal de géolocalisation donné considéré s'approche de 21 dB.

Afin d'améliorer les performances de détection des signaux de géolocalisation il est connu d'utiliser les almanachs inclus dans les messages de navigation pour prédire les satellites de la constellation qui sont en visibilité du récepteur. La configuration du récepteur peut également permettre d'améliorer les performances, e.g. en augmentant le temps d'intégration cohérente du signal reçu. Cependant, de telles approches ne permettent que des améliorations limitées. Les signaux de plus faibles amplitudes peuvent ainsi rester non détectés, ce qui réduit le nombre de signaux de géolocalisation potentiellement détectés par un récepteur de géolocalisation. Ceci détériore la précision de la géolocalisation obtenue, empêche l'utilisation d'un service d'intégrité autonome et perturbe la continuité et la disponibilité du système utilisé. Ce type d'interférence est particulièrement regrettable car il s'agit d'interférences liées au système de géolocalisation lui-même.

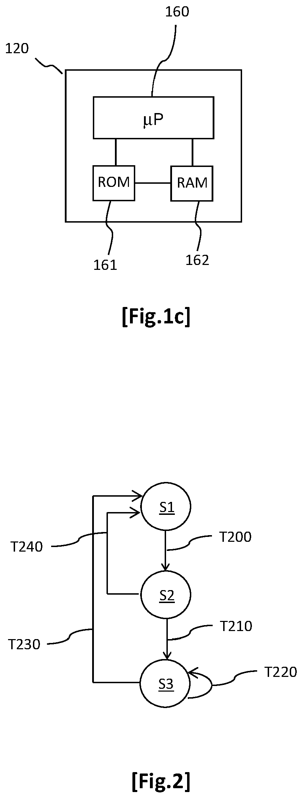

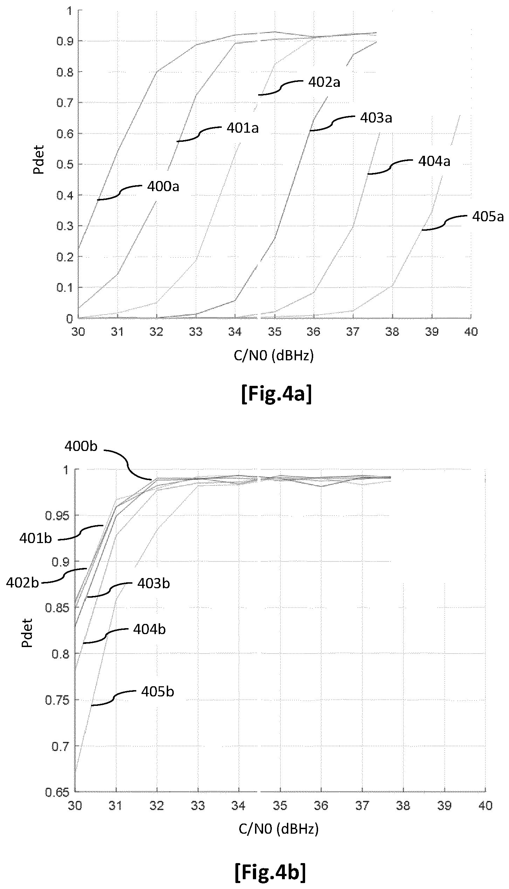

Le document US 2003/218568 divulgue un procédé et un récepteur (figure 4) conçus pour atténuer ou sensiblement supprimer des interférences de signaux entre des signaux détectés au niveau du récepteur. Une fois qu'un ou plusieurs signaux présumés parasites sont acquis, des paramètres permettant de modéliser le(s) parasite(s) sont déterminés. Une projection orthogonale (à projeter sur un sous-espace découpé par le(s) parasite(s)) est appliquée à la composée de tous les signaux (y) afin de projeter y sur le sous-espace (figure 2), ledit sous-espace étant non orthogonal à une représentation d'un signal souhaité (mais soumis à des parasites) des signaux de la composée. On peut réduire de manière efficace des signaux parasites, une propagation par trajets multiples, une mystification et/ou une transplexion si on équipe correctement le récepteur pour réaliser cette opération de projection.

Le document US2021/333411 divulgue un procédé de détection d'un signal anormal de système de positionnement par satellite (SPS) consiste à déterminer si un premier signal SPS est anormal en déterminant : si une différence de mesure réelle de signal SPS est cohérente avec une différence de mesure attendue ; si une puissance reçue du premier signal SPS dépasse une puissance maximale attendue ; si le premier signal SPS provient d'un emplacement de véhicule satellite (SV) cohérent avec de premières informations de localisation de SV ; si une première pseudo-distance par rapport à un premier SV diffère de plus d'un premier seuil de pseudo-distance d'une pseudo-distance attendue ; qu'un premier emplacement, sur la base de la première mesure de signal SPS, correspond à au moins l'un d'un emplacement inattendu ou d'une probabilité élevée d'emplacement anormal ; si une ou plusieurs mesures de signal de station de base sont cohérentes avec une première mesure de signal SPS ; et/ou si une qualité de signal mesurée du premier signal SPS est cohérente avec une qualité de signal attendue.

Par ailleurs, la géolocalisation obtenue par un récepteur de géolocalisation peut également être faussée par la détection de signaux de géolocalisation qui sont certes du type intra-système (i.e. du même type que celui des signaux de géolocalisation émis par les satellites de la constellation GNSS considérée), mais qui sont en fait des signaux malveillants (signaux dits « spoofers » selon la littérature anglo-saxonne). Plus particulièrement, de tels signaux malveillants véhiculent de fausses informations de géolocalisation afin de tromper le récepteur et lui faire déterminer une position ou une datation erronée.

Il existe ainsi un besoin pour une technique de détection des signaux de géolocalisation présents au sein d'un signal reçu par un récepteur de géolocalisation présentant des performances améliorées en présence de signaux interférents plus particulièrement du type intra-système.

De préférence, une telle technique devrait permettre de déterminer si un tel signal interférent est potentiellement un signal malveillant.

## Exposé de l'invention

L'invention concerne un procédé de détection d'une pluralité de signaux de géolocalisation au sein d'un signal reçu par un récepteur de géolocalisation, les signaux de géolocalisation étant du type transmis par des satellites d'une constellation de satellites de géolocalisation, chaque signal de géolocalisation véhiculant un identifiant d'un satellite de la constellation. Un tel procédé comprend :

- une étape de réception d'au moins une séquence d'échantillons du signal reçu provenant d'au moins un convertisseur analogique numérique relié à une antenne radiofréquence du récepteur ;
- une étape d'acquisition comprenant au moins une détection, au sein de la séquence reçue, d'un premier signal de géolocalisation véhiculant un premier identifiant de satellite de la constellation ;
- une étape d'estimation d'un jeu de caractéristiques du premier signal de géolocalisation au sein de la séquence reçue et d'initialisation d'un premier module de poursuite du premier signal de géolocalisation configuré pour estimer les caractéristiques du premier signal de géolocalisation au sein de séquences d'échantillons du signal reçu ;
- une nouvelle étape de réception d'au moins une nouvelle séquence d'échantillons en sortie dudit au moins un convertisseur analogique numérique ;
- une étape de génération d'un premier signal numérique représentatif d'au moins une partie du premier signal de géolocalisation en fonction d'un jeu de caractéristiques déterminé par le premier module de poursuite à partir d'au moins la nouvelle séquence d'échantillons ;
- une soustraction, à la nouvelle séquence reçue, du premier signal numérique généré pour fournir une séquence prétraitée ;
- au moins une nouvelle étape d'acquisition par détection, au sein de la séquence prétraitée, d'au moins un second signal de géolocalisation véhiculant un second identifiant de satellite de la constellation ; et
- au moins une nouvelle étape d'estimation d'au moins un jeu de caractéristiques du second signal de géolocalisation au sein de la séquence prétraitée et d'initialisation d'un second module de poursuite du second signal de géolocalisation.

La génération est fonction d'une séquence de préambule prédéterminée du premier signal de géolocalisation connue du récepteur de géolocalisation et la génération n'étant pas fonction de données utiles véhiculées par le premier signal de géolocalisation. Le premier signal numérique généré comprend au moins un échantillon représentatif du préambule du premier signal de géolocalisation. La soustraction est mise en œuvre pendant la durée du préambule du premier signal de géolocalisation, les différentes étapes étant mis en œuvre en travaillant sur des séquences successives d'échantillons de données

Ainsi, l'invention propose une solution nouvelle et inventive pour détecter des signaux de géolocalisation présents au sein d'un signal reçu par un récepteur de géolocalisation.

Plus particulièrement, l'application des étapes revendiquées permet de mettre en œuvre une technique de type annulation d'interférence au sein d'un échantillon du signal reçu et ainsi améliorer la détection effectuée sur l'échantillon prétraité correspondant.

Par ailleurs, le fait que l'annulation d'interférence se fasse au sein du signal reçu tel qu'il doit être traité par l'étape d'acquisition minimise le coût de la solution proposée en ce qui concerne la puissance de calcul nécessaire. En effet, annuler l'interférence plus en aval de la chaine de réception nécessiterait de générer un signal représentatif de l'interférence telle qu'elle est en ce point aval, ce qui nécessiterait de lui appliquer les traitements du signal correspondant de la chaine de réception. Par ailleurs, la génération étant fonction d'une séquence de préambule prédéterminée, la suppression des interférences peut se faire sans attendre la démodulation complète du signal de géolocalisation (e.g. la démodulation des bits de navigation du signal de géolocalisation). La latence du récepteur n'est ainsi pas augmentée par la mise en œuvre de la présente technique.

Dans certains modes de réalisation, l'étape d'acquisition, l'étape d'estimation, la nouvelle étape de réception, l'étape de génération et l'étape de soustraction sont mises en œuvre itérativement pour une pluralité d'identifiants de satellites de la constellation, l'acquisition exécutée lors d'une itération donnée mettant en œuvre la séquence prétraitée obtenue lors de l'itération précédant l'itération donnée. L'estimation d'un jeu de caractéristiques du signal de géolocalisation détecté lors de l'itération donnée mettant en œuvre un module de poursuite correspondant. La nouvelle étape d'acquisition et la nouvelle étape d'estimation mettent en œuvre la séquence prétraitée délivrée lors de la dernière itération desdites étapes.

Ainsi, les différents signaux de géolocalisation présents au sein du signal reçu sont détectés itérativement. Le récepteur définit lui-même la séquence de recherche des signaux de géolocalisation, soit arbitrairement soit par exemple sur la base des informations véhiculées dans les Almanachs. Dans ce dernier cas, le récepteur peut estimer quels sont les signaux de géolocalisation de plus fortes amplitudes et décider de détecter ces signaux en premier. En effet, les signaux de géolocalisation de plus fortes amplitudes sont détectés plus facilement, améliorant par là-même les performances de la présente méthode. La réduction des interférences résultant de la suppression des signaux de géolocalisation précédemment détectés permet d'améliorer la détection des signaux de géolocalisation résiduels au sein du signal reçu.

Dans certains modes de réalisation, la pluralité d'identifiants comprend au moins un couple d'identifiants identiques associés à un satellite donné de la constellation.

Ainsi, chaque satellite de la constellation ayant un identifiant unique, la détection de deux signaux de géolocalisation véhiculant un même identifiant est indicative que l'un des deux signaux de géolocalisation est potentiellement un signal de géolocalisation malveillant.

Dans certains modes de réalisation, le procédé comprend, lorsqu'un signal de géolocalisation est détecté pour chacun des identifiants du couple lors de l'acquisition, une génération d'une information d'alerte représentative d'une réception probable d'un signal de géolocalisation malveillant parmi les deux signaux de géolocalisation véhiculant les identifiants du couple.

Dans certains modes de réalisation, le jeu de caractéristiques comprend un jeu de paramètres de synchronisation du signal de géolocalisation par rapport au récepteur ainsi qu'une amplitude du signal de géolocalisation au sein du signal reçu.

Dans certains modes de réalisation, la génération est également fonction de caractéristiques d'une voie pilote du premier signal de géolocalisation. Le premier signal numérique généré comprend au moins un échantillon représentatif de la voie pilote du premier signal de géolocalisation. La soustraction est mise en œuvre pendant la durée de la voie pilote du premier signal de géolocalisation.

La génération n'est pas fonction de données utiles véhiculées par le premier signal de géolocalisation.

Ainsi, la suppression des interférences peut se faire sans attendre la démodulation complète du signal de géolocalisation (e.g. la démodulation des bits de navigation du signal de géolocalisation). La latence du récepteur n'est ainsi pas augmentée par la mise en œuvre de la présente technique. Dans certains modes de réalisation, les étapes précitées sont mises en œuvre pour chaque échantillon successif du signal reçu provenant dudit au moins un convertisseur analogique numérique.

L'invention concerne également un programme d'ordinateur comprenant des instructions de code de programme pour la mise en œuvre d'un procédé de détection tel que décrit précédemment, selon l'un quelconque de ses différents modes de réalisation, lorsqu'il est exécuté sur un ordinateur.

L'invention concerne également un dispositif de détection d'une pluralité de signaux de géolocalisation au sein d'un signal reçu par un récepteur de géolocalisation, les signaux de géolocalisation étant du type transmis par des satellites d'une constellation de satellites de géolocalisation, chaque signal de géolocalisation véhiculant un identifiant d'un satellite de la constellation. Un tel dispositif de détection comprend une machine de calcul reprogrammable ou une machine de calcul dédiée configurée pour mettre en œuvre les étapes du procédé de détection tel que décrit précédemment (selon l'un quelconque des différents modes de réalisation précités). Ainsi, les caractéristiques et avantages de ce dispositif sont les mêmes que ceux des étapes correspondantes du procédé de détection décrit précédemment. Par conséquent, ils ne sont pas détaillés plus amplement.

L'invention concerne également un récepteur de géolocalisation comprenant un dispositif de détection tel que décrit précédemment (selon l'un quelconque des différents modes de réalisation précités).

**Liste des figures**

D'autres buts, caractéristiques et avantages de l'invention apparaîtront plus clairement à la lecture de la description suivante, donnée à titre de simple exemple illustratif, et non limitatif, en relation avec les figures, parmi lesquelles :

[Fig.1] représente un récepteur de géolocalisation recevant une pluralité de signaux de géolocalisation émis par des satellites de géolocalisation selon un exemple de réalisation de l'invention ;

[Fig.1a] représente des fonctionnalités embarquées dans le récepteur de géolocalisation de la [Fig.1] selon un exemple de réalisation de l'invention ;

[Fig.1b] représente les fonctionnalités d'un module de détection embarqué dans le récepteur de géolocalisation de la [Fig.1] selon un exemple de réalisation de l'invention ;

[Fig.1c] représente des blocs structurels permettant d'implémenter les fonctionnalités du module de détection de la [Fig.1b] selon un exemple de réalisation de l'invention ;

[Fig.2] illustre la machine d'état pour l'activation des fonctionnalités du module de détection de la [Fig.1b] en ce qui concerne la détection et la poursuite d'un signal de géolocalisation donné selon un exemple de réalisation de l'invention ;

[Fig.3] illustre les étapes d'un procédé de détection d'une pluralité de signaux de géolocalisation tel que mis en œuvre par le module de détection du récepteur de la [Fig.1] selon un exemple de réalisation de l'invention ;

[Fig.4a] illustre des exemples de probabilités de détection, obtenues en mettant en œuvre une technique connue, d'un signal de géolocalisation au sein d'un signal reçu comprenant une pluralité de tels signaux de géolocalisation ;

[Fig.4b] illustre des exemples de probabilités de détection, obtenues en mettant en œuvre le procédé de la [Fig.3] selon un exemple de réalisation de l'invention, d'un signal de géolocalisation au sein d'un signal reçu comprenant une pluralité de tels signaux de géolocalisation.

## Description détaillée de modes de réalisation de l'invention

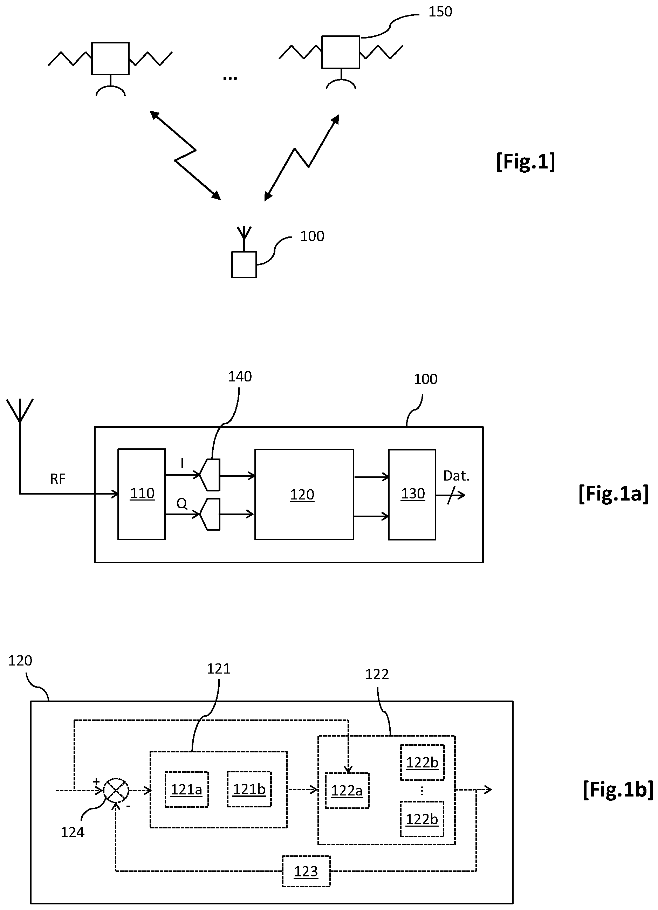

On présente désormais, en relation avec les **[Fig.1], [Fig.1a], [Fig.1b] et [Fig.1c]** un récepteur 100 de géolocalisation recevant une pluralité de signaux de géolocalisation émis par des satellites 150 de géolocalisation selon un exemple de réalisation de l'invention.

Plus particulièrement, les satellites 150 de géolocalisation font partie d'une constellation de satellites 150 de géolocalisation d'un système du type GNSS. Il peut s'agir par exemple d'un système GPS (pour « Global Positioning System » en anglais), Galileo, Glonass ou Beidou. Plus particulièrement, les signaux de géolocalisation véhiculent chacun un identifiant d'un satellite 150 de la constellation de sorte qu'une relation bijective peut être faite entre un identifiant et un satellite 150 donné de la constellation.

Un tel récepteur 100 de géolocalisation comprend par exemple ([Fig.1a]) une tête RF 110 permettant de transposer en bande de base les signaux de géolocalisation reçus. La tête RF 110 met en œuvre une architecture, par exemple du type à conversion directe ou superhétérodyne. La tête RF 110 délivre ici en bande de base deux signaux en quadrature, I et Q. Les signaux I et Q sont échantillonnés et quantifiés chacun par un convertisseur analogique numérique 140, ou ADC (pour « Analog to Digital Converter » en anglais). Ainsi, chaque ADC 140 délivre des échantillons du signal reçu traités par un dispositif 120 de détection. Toutefois, par soucis de clarté, les échanges entre les modules du dispositif 120 de détection illustrés sur la [Fig.1b] mettent en œuvre une seule voie véhiculant les échantillons complexes I+jQ. Cependant, dans d'autres types d'architectures massivement numérisées, un seul ADC échantillonne le signal transposé sur une fréquence intermédiaire suffisamment haute.

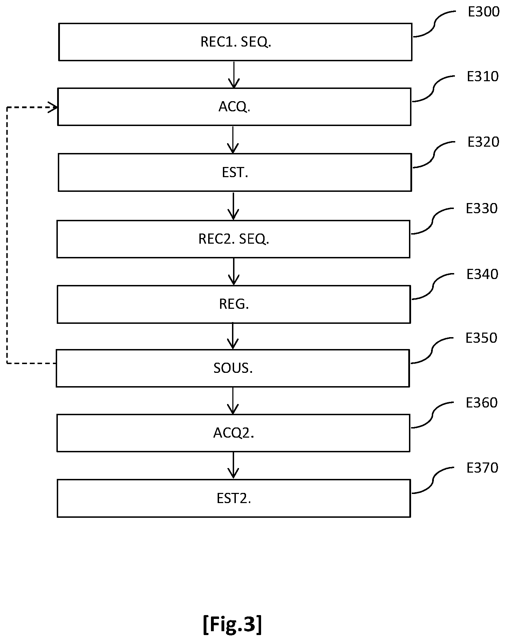

De retour aux [Fig.1], [Fig.1a], [Fig.1b] et [Fig.1c], le dispositif 120 de détection met en œuvre le procédé de détection amélioré selon la présente technique et décrit plus avant ci-dessous en relation avec la [Fig.3].

Pour ce faire, le dispositif 120 de détection comprend un module 121 d'acquisition de signaux de géolocalisation. De tels signaux sont ici soit émis par des satellites 150 correspondants de la constellation, soit émis par un dispositif malveillant essayant d'usurper l'identité d'un tel satellite 150 afin de fausser l'estimation de position faite par le récepteur 100 de géolocalisation (signaux dits « spoofers » selon la littérature anglo-saxonne).

Le module 121 d'acquisition comprend par exemple un module 121a de corrélation permettant de tester la présence des identifiants des satellites 150 de la constellation considérée au sein du signal reçu. Par exemple un tel identifiant est le code PRN (pour « Pseudo Random Noise » en anglais) du satellite 150 que l'on cherche à détecter. Il s'agit par exemple d'une séquence de 1023 bits pour les signaux de type L1C/A dans le système GPS. Le module 121a de corrélation implémente une corrélation entre, d'une part, une séquence d'échantillons du signal reçu représentative de l'identifiant recherché et, d'autre part, le code PRN correspondant. De tels codes PRN sont par exemple stockés dans une mémoire du module 121 d'acquisition.

Le module 121 d'acquisition comprend par exemple également un module 121b de détection travaillant sur les échantillons délivrés par le module 121a de corrélation. Un tel module 121b de détection met par exemple en œuvre des critères de décision particuliers afin de décider si le signal de géolocalisation associé à l'identifiant testé est présent ou non dans le signal reçu. De tels critères peuvent être par exemple des critères du type niveau d'un pic de corrélation supérieur à un seuil prédéterminé, ou du type prenant en compte le niveau de bruit pour gérer le taux de fausses alarmes.

Le dispositif 120 de détection comprend également un module 122 de suivi des caractéristiques du signal de géolocalisation détecté par le module 121 d'acquisition.

Plus particulièrement, le module 122 de suivi comprend un module 122a de filtrage des échantillons délivrés par le module 121 d'acquisition afin de réduire la puissance de bruit. Il s'agit par exemple d'un filtrage implémentant un moyennage et réinitialisé périodiquement (filtrage du type « Integrate and Dump » selon la terminologie de la littérature anglo-saxonne).

Le module 122 de suivi comprend également une pluralité de modules 122b de poursuite des signaux de géolocalisation détectés par le module 121 d'acquisition.

Plus particulièrement, un module 122b de poursuite est activé pour chaque signal de géolocalisation détecté. Ainsi, chaque module 122b de poursuite estime, pour le signal de géolocalisation détecté correspondant, un jeu de caractéristiques du signal de géolocalisation en question au sein des échantillons du signal reçu.

Par exemple, le jeu de caractéristiques comprend un jeu de paramètres de synchronisation du signal de géolocalisation considéré par rapport au récepteur 100 de géolocalisation ainsi qu'une amplitude du signal de géolocalisation considéré au sein des échantillons du signal reçu. Par exemple, les paramètres de synchronisation comprennent des paramètres de synchronisation en temps (e.g. retard temporel du signal ou instant optimal d'échantillonnage), en fréquence (e.g. écart de références de fréquence entre l'émission et la réception et fréquence Doppler) et en phase (e.g. écart de phase entre les références de fréquence entre l'émission et la réception une fois l'écart de fréquence compensé).

Le dispositif 120 de détection comprend également un module 123 de génération d'un signal numérique représentatif d'au moins une partie du signal de géolocalisation considéré en fonction d'un jeu de caractéristiques déterminé par le module 122b de poursuite correspondant. Par exemple, le signal numérique est un signal en bande de base dont une expression équivalente en temps continu, $S_{track}(t)$, est donnée par :

$$s_{track}(t) = \hat{a} \times code(t - \hat{\tau}) \times data(t - \hat{\tau}) \times exp\left(\hat{\phi} + 2i\pi\hat{f}_d t\right)$$

avec :

- $\hat{a}$, l'amplitude estimée du signal de géolocalisation considéré ;
- $\hat{\tau}$, le retard estimé du signal de géolocalisation considéré ;
- $\hat{\phi}$, la phase estimée du signal de géolocalisation considéré ;
- $\hat{f}_d$, la fréquence Doppler estimée du signal de géolocalisation considéré ;
- *code,* la séquence binaire correspondant au code PRN du signal de géolocalisation considéré ;
- *data,* la séquence binaire correspondant aux bits de navigation du signal de géolocalisation considéré ; et
- $\times$ désignant l'opération de multiplication dans le corps des nombres complexes.

Cependant, dans certains modes de réalisation, le signal numérique n'est pas fonction de données utiles véhiculées par le signal de géolocalisation considéré. Par exemple, le signal numérique est représentatif du préambule du signal de géolocalisation considéré ou bien est représentatif d'une voie pilote du signal de géolocalisation considéré. Dans ces cas, la suppression du signal de géolocalisation considéré au sein du signal reçu peut se faire sans attendre la démodulation complète du signal de géolocalisation considéré. La latence du récepteur 100 n'est ainsi pas augmentée par la mise en œuvre de la présente technique.

De retour à la [Fig.1b], le dispositif 120 de détection comprend également un module 124 soustracteur afin de soustraire, au signal reçu, le signal numérique généré et obtenir un signal prétraité. Une telle soustraction se fait par exemple échantillon par échantillon et de manière synchrone en fonction des paramètres de synchronisation précités de sorte à obtenir une annulation optimale du signal de géolocalisation représenté par le signal numérique.

Sur la base du signal prétraité, un nouveau signal de géolocalisation, associé à un nouvel identifiant de satellite 150, peut être détecté et poursuivi par le module 120 de détection. La sensibilité du module 120 de détection se trouve ainsi améliorée par l'annulation du signal de géolocalisation préalablement détecté. Par exemple, les signaux de géolocalisation de plus fortes amplitudes sont détectés et sont supprimés en premier du signal reçu. La réduction des interférences qui en résulte permet d'améliorer la détection des signaux de géolocalisation de plus faibles amplitudes reçus au sein du signal reçu simultanément aux signaux de fortes amplitudes. L'accroissement du nombre de satellites 150 détectés permet d'améliorer les performances de l'estimation de la position du récepteur 100 de géolocalisation par le module 130 de triangulation. Un tel module 130 de triangulation implémente par ailleurs des fonctions, par exemple du type filtrage de Kalman ou du type méthode des moindres carrés ou moindres carrés pondérés, pour estimer la position du récepteur 100 à partir des informations véhiculées par les signaux de géolocalisation.

Ainsi, la détection, le suivi, et l'annulation des différents signaux de géolocalisation au sein du signal reçu peut être mis en œuvre itérativement en testant successivement différents identifiants des satellites 150 de la constellation considérée.

Par ailleurs, le fait que l'annulation d'interférence se fasse au sein du signal reçu tel qu'il doit être traité par le module 121 d'acquisition minimise le coût de la solution proposée en ce qui concerne la puissance de calcul nécessaire. En effet, annuler l'interférence plus en aval de la chaine de réception nécessiterait de générer un signal représentatif de l'interférence telle qu'elle est en ce point aval, ce qui nécessiterait de lui appliquer les traitements du signal correspondant de la chaine de réception.

Les différents traitements implémentés dans les modules du dispositif 120 de détection peuvent être mis en œuvre en travaillant sur une fenêtre glissante d'échantillons du signal reçu. Dans ce cas, les traitements sont mis en œuvre à chaque nouvel échantillon du signal reçu délivré par les ADC 140. Alternativement, les différents traitements implémentés dans les modules du dispositif 120 peuvent également être mis en œuvre en travaillant sur des séquences successives (ou blocs successifs) d'échantillons de données.

Par ailleurs, les modules du dispositif 120 de détection peuvent être implémentés soit sous forme logicielle, soit sous forme matériel. Par exemple, le dispositif 120 comprend ([Fig.1c]) une mémoire vive 162 (par exemple une mémoire RAM), une unité de traitement 160 équipée par exemple d'un (ou plusieurs) processeur(s), et pilotée par un programme d'ordinateur stocké dans une mémoire morte 161 (par exemple une mémoire ROM ou un disque dur). A l'initialisation, les instructions de code du programme d'ordinateur sont par exemple chargées dans la mémoire vive 162 avant d'être exécutées par le processeur de l'unité de traitement 160. Le dispositif de traitement comprend par exemple, sans limitation, une interconnexion (bus) qui connecte une ou plusieurs unités de traitement, une ou plusieurs interfaces d'entrée/sortie couplée à une ou plusieurs entrées/sorties et la mémoire.

Les instructions peuvent être exécutées par exemple à l'aide d'une machine de calcul reprogrammable.

L'unité ou les unités de traitement peuvent être n'importe quel processeur approprié mis en œuvre comme une unité centrale de traitement (CPU), une unité de traitement graphique (GPU), un processeur de traitement du signal (DSP), un microcontrôleur, un circuit intégré spécifique à l'application (ASIC) ou un réseau de portes programmable (FPGA).

Dans le cas où le dispositif 120 de détection est réalisé au moins en partie avec une machine de calcul reprogrammable, le programme correspondant (c'est-à-dire la séquence d'instructions) pourra être stocké dans un médium de stockage amovible (tel que par exemple un CD-ROM, un DVD-ROM, une clé USB) ou non, ce médium de stockage étant lisible partiellement ou totalement par un ordinateur ou un processeur. Le programme stocké sur une mémoire amovible est par exemple copié en mémoire interne avant exécution du procédé. Ce programme pourra comprendre notamment un jeu d'instructions pour la mise en œuvre du procédé de détection de la [Fig.3] décrit plus avant ci-dessous.

On présente désormais, en relation avec la **[Fig.2],** la machine d'état pour l'activation des fonctionnalités du module 120 de détection en ce qui concerne la détection et la poursuite d'un signal de géolocalisation donné au sein du signal reçu, selon un exemple de réalisation de l'invention.

Plus particulièrement, la machine d'état comprend les trois états suivants :

- Etat S1 : Signal de géolocalisation non acquis ;
- Etat S2 : Acquisition du signal de géolocalisation ; et
- Etat S3 : Poursuite du signal de géolocalisation.

Les conditions de déclanchement des transitions entre les trois états sont les suivantes :

- Transition T200 : Début de l'acquisition par le module 121 d'acquisition ;
- Transition T210 : Signal de géolocalisation acquis ;
- Transition T220 : Signal de géolocalisation non perdu ;
- Transition T230 : Signal de géolocalisation perdu ; et
- Transition T240 : Signal de géolocalisation non acquis.

Par ailleurs, les transitions entre les trois états déclenchent les actions suivantes :

- Transition T200 : Exécution du module 122 de suivi, du module 123 de génération et du module 124 soustracteur pour les signaux de géolocalisation précédemment acquis ;
- Transition T210 : Exécution d'un module 122b de poursuite pour le signal de géolocalisation acquis ; et
- Transition T220 : Prise en compte, par le module 123 de génération, du jeu de caractéristiques délivré par le module 122b de poursuite pour le signal de géolocalisation acquis afin d'obtenir un signal numérique représentatif d'au moins une partie du signal de géolocalisation acquis. Prise en compte du signal numérique en question par le module 124 soustracteur afin de soustraire, au signal reçu, le signal numérique en question.

Ainsi lorsqu'un des signaux de géolocalisation est non acquis, à l'état S1, on déclenche le début d'une acquisition pour passer à l'état S2 d'acquisition du signal de géolocalisation par l'exécution du module 122 de suivi, du module 123 de génération et du module 124 soustracteur pour les signaux de géolocalisation précédemment acquis. Dans l'état S2 d'acquisition du signal de géolocalisation, on peut soit, en cas d'échec de l'acquisition T240, revenir à l'état S1 de signal non acquis soit, si le signal est acquis T210, passer à l'état S3 de poursuite du signal de géolocalisation avec l'exécution d'un module 122b de poursuite pour le signal de géolocalisation acquis On reste dans l'état S3 de poursuite du signal de géolocalisation tant que le module 123 de génération prend en compte le jeu de caractéristiques délivré par le module 122b de poursuite pour le signal de géolocalisation acquis afin d'obtenir un signal numérique représentatif d'au moins une partie du signal de géolocalisation acquis. Dans l'état S3 de poursuite du signal de géolocalisation, ledit signal numérique représentatif du signal de géolocalisation acquis est utilisé par le module 124 soustracteur afin de le soustraire, au signal reçu.

Dans l'état S3, le signal peut également être perdu T230, auquel cas on revient à l'état S1 de signal de géolocalisation non acquis.

Plusieurs signaux de géolocalisation sont ainsi traités et notamment plusieurs signaux de géolocalisation peuvent être poursuivis en parallèle.

On présente désormais, en relation avec la **[Fig.3]** les étapes d'un procédé de détection d'une pluralité de signaux de géolocalisation tel que mis en œuvre par le module 120 de détection selon un exemple de réalisation de l'invention.

Plus particulièrement, lors d'une **étape E300** de réception, le module 120 de détection reçoit une séquence d'échantillons du signal reçu provenant des ADC 140. Comme discuté ci-dessus en relation avec les [Fig.1], [Fig.1a], [Fig.1b] et [Fig.1c], il s'agit ici d'une séquence d'échantillons complexes comprenant les voies I et Q. Cependant, dans d'autres architectures, d'autres types de séquences d'échantillons peuvent être traités (e.g. des échantillons réels provenant d'un échantillonnage en fréquence intermédiaire).

De retour à la [Fig.3], lors d'une **étape E310** d'acquisition, un premier signal de géolocalisation véhiculant un premier identifiant de satellite de la constellation est détecté au sein de la séquence d'échantillons reçue par le module 121 d'acquisition.

Lors d'une **étape E320** d'estimation, un premier module 122b de poursuite du premier signal de géolocalisation est initié. Un jeu de caractéristiques du premier signal de géolocalisation est estimé au sein de la séquence reçue par le premier module 122b de poursuite.

Lors d'une **étape E330** de réception, une nouvelle séquence d'échantillons du signal reçu provenant des ADC 140 est reçue par le module 120 de détection.

Lors d'une **étape E340** de génération, un premier signal numérique représentatif d'au moins une partie du premier signal de géolocalisation est regénéré par le module 123 de génération en fonction d'un jeu de caractéristiques déterminé par le premier module 122b de poursuite à partir d'au moins la nouvelle séquence d'échantillons. Ainsi, le premier signal numérique est mis à jour au fur et à mesure de la mise à jour du jeu de caractéristiques par le premier module 122b de poursuite.

Comme discuté ci-dessus, un tel jeu de caractéristiques comprend par exemple un jeu de paramètres de synchronisation (en temps et/ou en fréquence et/ou phase) du premier signal de géolocalisation par rapport au récepteur 100 ainsi qu'une amplitude du premier signal de géolocalisation au sein du signal reçu.

De retour à la [Fig.3], lors d'une **étape E350** de soustraction, le premier signal numérique généré est soustrait à la nouvelle séquence d'échantillons reçue pour fournir une séquence d'échantillons prétraitée. Ainsi, la soustraction se fait au niveau des derniers échantillons utilisés pour l'estimation du jeu de caractéristiques, permettant par là-même d'optimiser les résultats de suppression du premier signal de géolocalisation au sein du signal reçu via la soustraction.

Lors d'une **étape E360** d'acquisition, un second signal de géolocalisation véhiculant un second identifiant de satellite de la constellation est détecté au sein de la séquence prétraitée par le module 121 d'acquisition.

Lors d'une **étape E370** d'estimation, un second module 122b de poursuite du second signal de géolocalisation est initié. Un jeu de caractéristiques du second signal de géolocalisation est estimé au sein de la séquence prétraitée par le second module 122b de poursuite.

Dans certains modes de réalisation, l'étape E310 d'acquisition, l'étape E320 d'estimation, l'étape E330 de réception, l'étape E340 de génération et l'étape E350 de soustraction sont mises en œuvre itérativement pour une pluralité d'identifiants de satellites de la constellation. L'étape E310 d'acquisition exécutée lors d'une itération donnée met en œuvre la séquence prétraitée obtenue lors de l'itération précédant l'itération donnée considérée. L'estimation d'un jeu de caractéristiques du signal de géolocalisation détecté lors de l'itération donnée considérée met en œuvre un module 122b de poursuite correspondant. L'étape E360 d'acquisition et l'étape E370 d'estimation mettent en œuvre l'échantillon prétraité délivré lors de la dernière itération des étapes E310 à E350.

Ainsi, les différents signaux de géolocalisation présents au sein du signal reçu sont détectés itérativement.

Dans certains modes de réalisation, la pluralité d'identifiants comprend au moins un couple d'identifiants identiques associés à un satellite 150 donné de la constellation.

Ainsi, chaque satellite 150 de la constellation ayant un identifiant unique, la détection de deux signaux de géolocalisation véhiculant un même identifiant est indicative que l'un des deux signaux de géolocalisation est potentiellement un signal de géolocalisation malveillant.

De la sorte, selon certaines implémentations, lorsqu'un signal de géolocalisation est détecté pour chacun des identifiants du couple lors de l'étape E310 d'acquisition, une information d'alerte représentative d'une réception probable d'un signal de géolocalisation malveillant parmi les deux signaux de géolocalisation véhiculant les identifiants dudit couple est générée. Lors de l'étape E340 la génération est également fonction d'une séquence de préambule prédéterminée du premier signal de géolocalisation. Ainsi, le premier signal numérique généré comprend au moins un échantillon représentatif du préambule du premier signal de géolocalisation. Lors de l'étape E350, la soustraction est mise en œuvre pendant la durée du préambule du premier signal de géolocalisation.

Plus particulièrement, une telle séquence de préambule est connue du récepteur de géolocalisation. Ainsi, il n'est pas nécessaire d'attendre la démodulation des données utiles véhiculées (e.g. l'information des bits de navigation) par le premier signal de géolocalisation afin de générer le premier signal de géolocalisation et soustraire ce signal à la nouvelle séquence d'échantillons reçue. Selon une telle approche, la latence de la chaine de réception n'est pas augmentée par la présente technique.

Dans certains modes de réalisation, lors de l'étape E340 la génération est également fonction de caractéristiques d'une voie pilote du premier signal de géolocalisation. Le premier signal numérique généré comprend au moins un échantillon représentatif de la voie pilote du premier signal de géolocalisation. Lors de l'étape E350, la soustraction est mise en œuvre pendant la durée de la voie pilote du premier signal de géolocalisation.

Dans certains modes de réalisation qui ne font pas partie de l'invention telle que revendiquée, lors de l'étape E340 la génération est également fonction d'au moins un bit de navigation démodulé du premier signal de géolocalisation. Le premier signal numérique généré comprend au moins un échantillon représentatif dudit au moins un bit de navigation démodulé. Lors de l'étape E350, la soustraction est mise en œuvre pendant la durée d'une partie du premier signal de géolocalisation véhiculant ledit au moins un bit de navigation. Par exemple, la nouvelle séquence d'échantillons reçue est mise en mémoire tampon le temps que la démodulation des données véhiculées soit effectuée, ceci afin de pouvoir soustraire le premier signal numérique généré de manière synchrone à la nouvelle séquence d'échantillons reçue. La soustraction du premier signal numérique généré introduit dans ce cas de la latence au sein de la chaine de réception. La même approche peut être suivie lorsque le premier signal de géolocalisation est généré en tenant compte, d'une part, des données véhiculées par le premier signal de géolocalisation (e.g. l'information des bits de navigation) et, d'autre part, d'une séquence de préambule prédéterminée du premier signal de géolocalisation et/ou de caractéristiques d'une voie pilote du premier signal de géolocalisation. Lors de l'étape E340 la génération n'est pas fonction de données utiles véhiculées par le premier signal de géolocalisation. Ainsi, la suppression des interférences peut se faire sans attendre la démodulation complète du signal de géolocalisation (e.g. la démodulation des bits de navigation du signal de géolocalisation). La latence du récepteur n'est ainsi pas augmentée par la mise en œuvre de la présente technique. Comme détaillé ci-dessus en relation avec les [Fig.1], [Fig.1a], [Fig.1b] et [Fig.1c], les différents traitements implémentés dans les modules du dispositif 120 de détection peuvent être mis en œuvre en travaillant sur une fenêtre glissante d'échantillon du signal reçu ; ce mode de fonctionnement ne correspond pas à l'invention telle que revendiquée. Dans ce cas, les traitements sont mis en œuvre à chaque nouvel échantillon du signal reçu délivré par les ADC 140. Les différents traitements implémentés dans les modules du dispositif sont mis en œuvre en travaillant sur des séquences successives (ou blocs successifs) d'échantillons de données. Ainsi, les étapes précitées du procédé de la [Fig.3] sont mises en œuvre pour chaque échantillon successif (i.e. chaque nouvel échantillon) du signal reçu provenant des ADC 140 ou, alternativement, pour chaque nouvelle séquence successive de tels échantillons. On présente désormais, en relation avec la **[Fig.4a]** et la **[Fig.4b],** les performances de détection d'un signal de géolocalisation obtenue en mettant en œuvre ou non le procédé de la [Fig.3] selon un exemple de réalisation de l'invention.

Plus particulièrement, la [Fig.4a] illustre des exemples de probabilités de détection, obtenues en mettant en œuvre une technique connue, d'un signal de géolocalisation au sein d'un signal reçu comprenant le signal de géolocalisation en question ainsi qu'un signal de géolocalisation interférent. La probabilité de détection du signal de géolocalisation est ici fonction du rapport C/N0 exprimé en dBHz, avec C la puissance du signal de géolocalisation que l'on cherche à détecter et N0 la densité spectrale de puissance de bruit. Par ailleurs, la probabilité de détection en question est donnée pour différentes valeurs du rapport $C_{inter}$/N0 exprimé en dBHz, avec $C_{inter}$ la puissance du signal de géolocalisation interférent considéré. Par ailleurs, la [Fig.4b] reprend le même formalisme de présentation, mais pour une de probabilité de détection obtenue en mettant en œuvre le procédé de la [Fig.3]. Ainsi :

- les courbes 400a et 400b correspondent à un rapport $C_{inter}$/N0 de 50 dBHz ;
- les courbes 401a et 401b correspondent à un rapport $C_{inter}$/N0 de 52 dBHz ;
- les courbes 402a et 402b correspondent à un rapport $C_{inter}$/N0 de 54 dBHz ;
- les courbes 403a et 403b correspondent à un rapport $C_{inter}$/N0 de 56 dBHz ;
- les courbes 404a et 404b correspondent à un rapport $C_{inter}$/N0 de 58 dBHz ;
- les courbes 405a et 405b correspondent à un rapport $C_{inter}$/N0 de 60 dBHz.

Les courbes en question montrent clairement l'amélioration de la probabilité de détection d'un signal de géolocalisation au sein d'un signal reçu comprenant une pluralité de tels signaux de géolocalisation lors de la mise en œuvre du procédé de la [Fig.3]. Une telle amélioration est obtenue quelle que soit la puissance du signal de géolocalisation détecté au sein du signal reçu.

## Revendications

1. Procédé de détection d'une pluralité de signaux de géolocalisation au sein d'un signal reçu par un récepteur (100) de géolocalisation, les signaux de géolocalisation étant du type transmis par des satellites (150) d'une constellation de satellites de géolocalisation, chaque signal de géolocalisation véhiculant un identifiant d'un satellite de la constellation, comprenant :

   - une étape de réception (E300) d'au moins une séquence d'échantillons du signal reçu provenant d'au moins un convertisseur (140) analogique numérique relié à une antenne radiofréquence du récepteur ;
   - une étape d'acquisition (E310) comprenant au moins une détection, au sein de la séquence reçue, d'un premier signal de géolocalisation véhiculant un premier identifiant de satellite de la constellation ;
   - une étape d'estimation (E320) d'un jeu de caractéristiques dudit premier signal de géolocalisation au sein de ladite séquence reçue et d'initialisation d'un premier module de poursuite (122b) dudit premier signal de géolocalisation configuré pour estimer les caractéristiques du premier signal de géolocalisation au sein de séquences d'échantillons du signal reçu ;
   - une nouvelle étape de réception (E330) d'au moins une nouvelle séquence d'échantillons en sortie dudit au moins un convertisseur analogique numérique ;
   - une étape de génération (E340) d'un premier signal numérique représentatif d'au moins une partie dudit premier signal de géolocalisation en fonction d'un jeu de caractéristiques déterminé par le premier module de poursuite à partir d'au moins la nouvelle séquence d'échantillons ;
   - une soustraction (E350), à la nouvelle séquence reçue, du premier signal numérique généré pour fournir une séquence prétraitée ;
   - au moins une nouvelle étape d'acquisition (E360) par détection, au sein de ladite séquence prétraitée, d'au moins un second signal de géolocalisation véhiculant un second identifiant de satellite de la constellation ; et
   - au moins une nouvelle étape d'estimation (E370) d'au moins un jeu de caractéristiques dudit second signal de géolocalisation au sein de ladite séquence prétraitée et d'initialisation d'un second module de poursuite (122b) dudit second signal de géolocalisation,

   **caractérisé en ce que** ladite génération est également fonction d'une séquence de préambule prédéterminée dudit premier signal de géolocalisation connue du récepteur de géolocalisation et la génération n'étant pas fonction de données utiles véhiculées par le premier signal de géolocalisation, le premier signal numérique généré comprenant au moins un échantillon représentatif du préambule dudit premier signal de géolocalisation, et dans lequel la soustraction est mise en œuvre pendant la durée du préambule dudit premier signal de géolocalisation, les différentes étapes étant mis en œuvre en travaillant sur des séquences successives d'échantillons de données.

2. Procédé selon la revendication 1, dans lequel l'étape d'acquisition, l'étape d'estimation, la nouvelle étape de réception, l'étape de génération et l'étape de soustraction sont mises en œuvre itérativement pour une pluralité d'identifiants de satellites de la constellation, l'acquisition exécutée lors d'une itération donnée mettant en œuvre la séquence prétraitée obtenue lors de l'itération précédant ladite itération donnée,

   l'estimation d'un jeu de caractéristiques du signal de géolocalisation détecté lors de l'itération donnée mettant en œuvre un module de poursuite correspondant,
   et dans lequel la nouvelle étape d'acquisition et la nouvelle étape d'estimation mettent en œuvre la séquence prétraitée délivrée lors de la dernière itération desdites étapes.

3. Procédé selon la revendication 2, dans lequel ladite pluralité d'identifiants comprend au moins un couple d'identifiants identiques associés à un satellite donné de la constellation.

4. Procédé selon la revendication 3, comprenant, lorsqu'un signal de géolocalisation est détecté pour chacun des identifiants dudit couple lors de ladite acquisition, une génération d'une information d'alerte représentative d'une réception probable d'un signal de géolocalisation malveillant parmi les deux signaux de géolocalisation véhiculant les identifiants dudit couple.

5. Procédé selon l'une quelconque des revendications 1 à 4, dans lequel ledit jeu de caractéristiques comprend un jeu de paramètres de synchronisation du signal de géolocalisation par rapport au récepteur ainsi qu'une amplitude du signal de géolocalisation au sein du signal reçu.

6. Procédé selon l'une quelconque des revendications 1 à 5, dans lequel ladite génération est également fonction de caractéristiques d'une voie pilote dudit premier signal de géolocalisation, le premier signal numérique généré comprenant au moins un échantillon représentatif de ladite voie pilote dudit premier signal de géolocalisation, et dans lequel la soustraction est mise en œuvre pendant la durée de ladite voie pilote dudit premier signal de géolocalisation.

7. Procédé selon l'une quelconque des revendications 1 à 8, dans lequel lesdites étapes sont mises en œuvre pour chaque échantillon successif du signal reçu provenant dudit au moins un convertisseur analogique numérique.

8. Produit programme d'ordinateur comprenant des instructions de code de programme pour la mise en œuvre du procédé selon l'une quelconque des revendications 1 à 9, lorsque ledit programme est exécuté sur un ordinateur.

9. Dispositif (120) de détection d'une pluralité de signaux de géolocalisation au sein d'un signal reçu par un récepteur (100) de géolocalisation, les signaux de géolocalisation étant du type transmis par des satellites (150) d'une constellation de satellites de géolocalisation, chaque signal de géolocalisation véhiculant un identifiant d'un satellite de la constellation, qui comprend une machine de calcul reprogrammable (160) ou une machine de calcul dédiée configurée pour effectuer :

- une réception d'au moins une séquence d'échantillons du signal reçu provenant d'au moins un convertisseur (140) analogique numérique relié à une antenne radiofréquence du récepteur;
- une acquisition comprenant au moins une détection, au sein de la séquence reçue, d'un premier signal de géolocalisation véhiculant un premier identifiant de satellite de la constellation ;
- une estimation d'un jeu de caractéristiques dudit premier signal de géolocalisation au sein de ladite séquence reçue et d'initialisation d'un premier module de poursuite (122b) dudit premier signal de géolocalisation configuré pour estimer les caractéristiques du premier signal de géolocalisation au sein de séquences d'échantillons du signal reçu ;
- une nouvelle réception d'au moins une nouvelle séquence d'échantillons en sortie dudit au moins un convertisseur analogique numérique ;
- une génération d'un premier signal numérique représentatif d'au moins une partie dudit premier signal de géolocalisation en fonction d'un jeu de caractéristiques déterminé par le premier module de poursuite à partir d'au moins la nouvelle séquence d'échantillons ;
- une soustraction, à la nouvelle séquence reçue, du premier signal numérique généré pour fournir une séquence prétraitée ;
- au moins une nouvelle acquisition par détection, au sein de ladite séquence prétraitée, d'au moins un second signal de géolocalisation véhiculant un second identifiant de satellite de la constellation ; et
- au moins une nouvelle estimation d'au moins un jeu de caractéristiques dudit second signal de géolocalisation au sein de ladite séquence prétraitée et d'initialisation d'un second module de poursuite (122b) dudit second signal de géolocalisation,

**caractérisé en ce que** ladite génération est également fonction d'une séquence de préambule prédéterminée dudit premier signal de géolocalisation connue du récepteur de géolocalisation et la génération n'étant pas fonction de données utiles véhiculées par le premier signal de géolocalisation, le premier signal numérique généré comprenant au moins un échantillon représentatif du préambule dudit premier signal de géolocalisation, et dans lequel la soustraction est mise en œuvre pendant la durée du préambule dudit premier signal de géolocalisation, les différents traitements implémentés dans les modules du dispositif (120) de détection étant mis en œuvre en travaillant sur des séquences successives d'échantillons de données.

10. Récepteur (100) de géolocalisation comprenant un dispositif selon la revendication 11.

**Patentansprüche**

1. Verfahren zum Erfassen einer Vielzahl von Geolokalisierungssignalen innerhalb eines von einem Geolokalisierungsempfänger (100) empfangenen Signals, wobei die Geolokalisierungssignale von dem Typ sind, der von Satelliten (150) einer Konstellation von Geolokalisierungssatelliten übertragen wird, wobei jedes Geolokalisierungssignal eine Satellitenkennung der Konstellation überträgt, umfassend:

- einen Empfangsschritt (E300) von mindestens einer Probensequenz des empfangenen Signals von mindestens einem digital-analogen Wandler (140), der mit einer Funkfrequenzantenne des Empfängers verbunden ist;
- einen Beschaffungsschritt (E310), umfassend mindestens eine Erfassung, innerhalb der empfangenen Sequenz, eines ersten Geolokalisierungssignals, das eine erste Satellitenkennung der Konstellation überträgt;
- einen Schätzungsschritt (E320) eines Satzes von Merkmalen des ersten Geolokalisierungssignals innerhalb der empfangenen Sequenz und der Initialisierung eines ersten Verfolgungsmoduls (122b) des ersten Geolokalisierungssignals, das so konfiguriert ist, dass es die Merkmale des ersten Geolokalisierungssignals innerhalb von Probensequenzen des empfangenen Signals schätzt;
- einen neuen Empfangsschritt (E330) von mindestens einer neuen Probensequenz am Ausgang des mindestens einen analog-digitalen Wandlers;
- einen Erzeugungsschritt (E340) eines ersten digitalen Signals, das für mindestens einen Teil des ersten Geolokalisierungssignals in Abhängigkeit von einem von dem ersten Verfolgungsmodul bestimmten Satz von Merkmalen aus mindestens der neuen Probensequenz repräsentativ ist;
- Subtrahieren (E350) des ersten erzeugten digitalen Signals von der neu empfangenen Sequenz, um eine vorverarbeitete Sequenz bereitzustellen;
- mindestens einen neuen Beschaffungsschritt (E360) durch Erfassung, innerhalb der vorverarbeiteten Sequenz, von mindestens einem zweiten Geolokalisierungssignal, das eine zweite Satellitenkennung der Konstellation überträgt; und
- mindestens einen neuen Schätzungsschritt (E370) mindestens eines Satzes von Merkmalen des zweiten Geolokalisierungssignals innerhalb der vorbearbeiteten Sequenz und Initialisierung eines zweiten Verfolgungsmoduls (122b) des zweiten Geolokalisierungssignals, **dadurch gekennzeichnet, dass** das Erzeugen auch von einer vorbestimmten Präambelsequenz des ersten Geolokalisierungssignals abhängt, die dem Geolokalisierungsempfänger bekannt ist, und dass das Erzeugen nicht von Nutzdaten abhängt, die durch das erste Geolokalisierungssignal übertragen werden, wobei das erzeugte erste digitale Signal mindestens eine Probe umfasst, die repräsentativ für die Präambel des ersten Geolokalisierungssignals ist, und wobei die Subtraktion während der Dauer der Präambel des ersten Geolokalisierungssignals umgesetzt wird, wobei die verschiedenen Schritte durch Arbeiten an aufeinanderfolgenden Sequenzen von Datenproben umgesetzt werden.

2. Verfahren nach Anspruch 1, wobei der Beschaffungsschritt, der Schätzungsschritt, der neue Empfangsschritt, der Erzeugungsschritt und der Subtraktionsschritt iterativ für eine Vielzahl von Satellitenkennungen der Konstellation umgesetzt werden,

   wobei das Beschaffen, das während einer bestimmten Iteration durchgeführt wird, die vorbearbeitete Sequenz umsetzt, die während der der gegebenen Iteration vorausgehenden Iteration erhalten wurde,
   das Schätzen eines Satzes von Merkmalen des bei der gegebenen Iteration erfassten Geolokalisierungssignals ein entsprechendes Verfolgungsmodul umsetzt,
   und wobei der neue Beschaffungsschritt und der neue Schätzungsschritt die bei der letzten Iteration der Schritte ausgegebene vorbearbeitete Sequenz umsetzen.

3. Verfahren nach Anspruch 2, wobei die Vielzahl von Kennungen mindestens ein Paar identischer Kennungen umfasst, die mit einem bestimmten Satelliten der Konstellation verbunden sind.

4. Verfahren nach Anspruch 3, umfassend, wenn für jede der Kennungen des Paares bei dem Erfassen ein Geolokalisierungssignal erkannt wird, das Erzeugen einer Warninformation, die einen wahrscheinlichen Empfang eines schädlichen Geolokalisierungssignals unter den beiden Geolokalisierungssignalen repräsentiert, die die Kennungen des Paares übertragen.

5. Verfahren nach einem der Ansprüche 1 bis 4, wobei der Satz von Merkmalen einen Satz von Synchronisationsparametern des Geolokalisierungssignals in Bezug auf den Empfänger sowie eine Amplitude des Geolokalisierungssignals innerhalb des empfangenen Signals umfasst.

6. Verfahren nach einem der Ansprüche 1 bis 5, wobei das Erzeugen auch von Merkmalen eines Pilotpfads des ersten Geolokalisierungssignals abhängt, wobei das erste erzeugte digitale Signal mindestens eine repräsentative Probe des Pilotpfads des ersten Geolokalisierungssignals umfasst, und wobei das Subtrahieren während der Dauer des Pilotpfads des ersten Geolokalisierungssignals umgesetzt wird.

**EP 4 359 825 B1**

7. Verfahren nach einem der Ansprüche 1 bis 8, wobei die Schritte für jede aufeinanderfolgende Probe des von dem mindestens einen analog-digitalen Wandler empfangenen Signals umgesetzt werden.

8. Computerprogrammprodukt, das Programmcodeanweisungen zum Umsetzen des Verfahrens nach einem der Ansprüche 1 bis 9 umfasst, wenn das Programm auf einem Computer umgesetzt wird.

9. Vorrichtung (120) zum Erfassen einer Vielzahl von Geolokalisierungssignalen innerhalb eines von einem Geolokalisierungsempfänger (100) empfangenen Signals, wobei die Geolokalisierungssignale von dem Typ sind, der von Satelliten (150) einer Konstellation von Geolokalisierungssatelliten übertragen wird, wobei jedes Geolokalisierungssignal eine Kennung eines Satelliten der Konstellation überträgt, die eine umprogrammierbare Rechenmaschine (160) oder eine dedizierte Rechenmaschine umfasst, die konfiguriert ist, um Folgendes durchzuführen:

  - Empfangen von mindestens einer Probensequenz des empfangenen Signals von mindestens einem digital-analogen Wandler (140), der mit einer Funkfrequenzantenne des Empfängers verbunden ist;
  - Beschaffen, mindestens umfassend ein Erfassen, innerhalb der empfangenen Sequenz, eines ersten Geolokalisierungssignals, das eine erste Satellitenkennung der Konstellation überträgt;
  - Schätzen eines Satzes von Merkmalen des ersten Geolokalisierungssignals innerhalb der empfangenen Sequenz und Initialisieren eines ersten Verfolgungsmoduls (122b) des ersten Geolokalisierungssignals, das so konfiguriert ist, dass es die Merkmale des ersten Geolokalisierungssignals innerhalb von Probensequenzen des empfangenen Signals schätzt;
  - erneutes Empfangen mindestens einer neuen Probensequenz am Ausgang des mindestens einen analog-digitalen Wandlers;
  - Erzeugen eines ersten digitalen Signals, das für mindestens einen Teil des ersten Geolokalisierungssignals repräsentativ ist, basierend auf einem Satz von Merkmalen, die von dem ersten Verfolgungsmodul ausgehend von mindestens der neuen Probensequenz bestimmt werden;
  - Subtrahieren des ersten erzeugten digitalen Signals von der neu empfangenen Sequenz, um eine vorbearbeitete Sequenz bereitzustellen;
  - mindestens ein erneutes Beschaffen durch Erfassen, innerhalb der vorbearbeiteten Sequenz, von mindestens einem zweiten Geolokalisierungssignal, das eine zweite Satellitenkennung der Konstellation überträgt; und
  - mindestens ein neues Schätzen mindestens eines Satzes an Merkmalen des zweiten Geolokalisierungssignals innerhalb der vorbearbeiteten Sequenz und Initialisieren eines zweiten Verfolgungsmoduls (122b) des zweiten Geolokalisierungssignals,

  **dadurch gekennzeichnet, dass** das Erzeugen auch von einer vorbestimmten Präambelsequenz des ersten Geolokalisierungssignals abhängt, die dem Geolokalisierungsempfänger bekannt ist, und dass das Erzeugen nicht von Nutzdaten abhängt, die durch das erste Geolokalisierungssignal übertragen werden, wobei das erzeugte erste digitale Signal mindestens eine Probe umfasst, die repräsentativ für die Präambel des ersten Geolokalisierungssignals ist, und wobei die Subtraktion während der Dauer der Präambel des ersten Geolokalisierungssignals umgesetzt wird, wobei die verschiedenen in den Modulen der Erfassungsvorrichtung (120) implementierten Verarbeitungen durch Arbeiten an aufeinanderfolgenden Sequenzen von Datenproben umgesetzt werden.

10. Geolokalisierungsempfänger (100), der eine Vorrichtung nach Anspruch 11 umfasst.

**Claims**

1. Method for detecting a plurality of geolocation signals within a signal received by a geolocation receiver (100), the geolocation signals being of the type transmitted by satellites (150) in a constellation of geolocation satellites, each geolocation signal conveying an identifier of a satellite in the constellation, comprising:

  - a step of receiving (E300) at least one sequence of samples of the signal received from at least one analog-to-digital converter (140) connected to a radio-frequency antenna of the receiver;
  - an acquisition step (E310) comprising at least one detection, within the received sequence, of a first geolocation signal conveying a first identifier of a satellite in the constellation;
  - a step of estimating (E320) a set of characteristics of said first geolocation signal within said received sequence and initializing a first module (122b) for tracking said first geolocation signal configured to estimate the characteristics of the first geolocation signal within sequences of samples of the received signal;
  - a new step of receiving (E330) at least one new sequence of samples at the output of said at least one analog-to-digital converter;

- a step of generating (E340) a first digital signal representative of at least a part of said first geolocation signal according to a set of characteristics determined by the first tracking module from at least the new sequence of samples;

- subtracting (E350), from the newly received sequence, the first digital signal generated to provide a pre-processed sequence;

- at least one new acquisition step (E360) by detecting, within said pre-processed sequence, at least one second geolocation signal conveying a second identifier of a satellite in the constellation; and

- at least one new step of estimating (E370) at least one set of characteristics of said second geolocation signal within said pre-processed sequence and initializing a second module (122b) for tracking said second geolocation signal, **characterized in that** said generation is also a function of a predetermined preamble sequence of said first geolocation signal known to the geolocation receiver and the generation not being a function of useful data conveyed by the first geolocation signal, the first generated digital signal comprising at least one sample representative of the preamble of said first geolocation signal, and wherein the subtraction is implemented during the duration of the preamble of said first geolocation signal, the various steps being implemented by working on successive sequences of data samples.

2. Method according to claim 1, wherein the acquisition step, the estimation step, the new reception step, the generation step, and the subtraction step are implemented iteratively for a plurality of identifiers of satellites in the constellation,

the acquisition executed during a given iteration implementing the pre-processed sequence obtained during the iteration preceding said given iteration,
the estimation of a set of characteristics of the geolocation signal detected during the given iteration using a corresponding tracking module,
and wherein the new acquisition step and the new estimation step implement the preprocessed sequence delivered during the last iteration of said steps.

3. Method according to claim 2, wherein said plurality of identifiers comprises at least one pair of identical identifiers associated with a given satellite in the constellation.

4. Method according to claim 3, comprising, when a geolocation signal is detected for each of the identifiers of said pair during said acquisition, generating alert information representative of a probable reception of a malicious geolocation signal among the two geolocation signals conveying the identifiers of said pair.

5. Method according to any one of claims 1 to 4, wherein said set of characteristics comprises a set of parameters for synchronizing the geolocation signal with respect to the receiver as well as an amplitude of the geolocation signal within the received signal.

6. Method according to any one of claims 1 to 5, wherein said generation is also dependent on characteristics of a pilot path of said first geolocation signal, the first generated digital signal comprising at least one sample representative of said pilot path of said first geolocation signal,
and wherein the subtraction is implemented during the duration of said pilot path of said first geolocation signal.

7. Method according to any one of claims 1 to 8, wherein said steps are implemented for each successive sample of the signal received from said at least one analog-to-digital converter.

8. Computer program product comprising program code instructions for implementing the method according to any of claims 1 to 9, when said program is executed on a computer.

9. Device (120) for detecting a plurality of geolocation signals within a signal received by a geolocation receiver (100), the geolocation signals being of the type transmitted by satellites (150) in a constellation of geolocation satellites, each geolocation signal conveying an identifier of a satellite in the constellation, which comprises a reprogrammable computing machine (160) or a dedicated computing machine configured to perform:

- a reception of at least one sequence of samples of the received signal from at least one analog-to-digital converter (140) connected to a radio-frequency antenna of the receiver;
- an acquisition comprising at least one detection, within the received sequence, of a first geolocation signal conveying a first identifier of a satellite in the constellation;

- an estimation of a set of characteristics of said first geolocation signal within said received sequence and initialization of a first module (122b) for tracking said first geolocation signal configured to estimate the characteristics of the first geolocation signal within the sequences of samples of the received signal;

- a new reception of at least one new sequence of samples at the output of said at least one analog-to-digital converter;

- a generation of a first digital signal representative of at least a part of said first geolocation signal according to a set of characteristics determined by the first tracking module from at least the new sequence of samples;

- a subtraction, from the newly received sequence, of the first digital signal generated to provide a pre-processed sequence;

- at least one new acquisition by detection, within said pre-processed sequence, of at least one second geolocation signal conveying a second identifier of a satellite in the constellation; and

- at least one new estimation of at least one set of characteristics of said second geolocation signal within said pre-processed sequence and initialisation of a second module (122b) for tracking said second geolocation signal, **characterized in that** said generation is also a function of a predetermined preamble sequence of said first geolocation signal known to the geolocation receiver and the generation not being a function of useful data conveyed by the first geolocation signal, the first generated digital signal comprising at least one sample representative of the preamble of said first geolocation signal, and wherein the subtraction is implemented during the duration of the preamble of said first geolocation signal, the various processing operations implemented in the modules of the detection device (120) being implemented by working on successive sequences of data samples.

**10.** Geolocation receiver (100) comprising a device according to claim 11.

[Fig.1]

[Fig.1a]

[Fig.1b]

[Fig.1c]

[Fig.2]

[Fig.3]

[Fig.4a]

[Fig.4b]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003218568 A

- US 2021333411 A